# EUROPÄISCHE PATENTANMELDUNG

(11) **EP 3 508 295 A1**
(43) Veröffentlichungstag der Anmeldung: **10.07.2019**
(21) Anmeldenummer: 18206736.3
(22) Anmeldetag: 16.11.2018
(51) Int. Cl.: B23F 23/12, B23Q 11/10

(54) **VORRICHTUNG ZUM ABDECKEN EINES ZAHNPROFILES**

(30) Priorität: 09.01.2018 DE 102018100376
(71) Anmelder: Rolls-Royce Deutschland Ltd & Co KG, 15827 Blankenfelde-Mahlow (DE)
(72) Erfinder: Kappmeyer, Gregor, 15827 Blankenfelde-Mahlow (DE)
(74) Vertreter: Schmidt, Martin Michael

(57) **Zusammenfassung**

Es wird eine Vorrichtung (19) zum Abdecken eines Zahnprofiles (20) während einer spanabhebenden Bearbeitung mit einem Werkzeug (22) mit einer Einrichtung (23) zum Beaufschlagen wenigstens eines Kontaktbereiches (24) zwischen dem Werkzeug (22) und dem Zahnprofil (20) während der spanabhebenden Bearbeitung des Zahnprofils (20) durch das Werkzeug (22) mit Kühlschmierstoff beschrieben. Die Einrichtung (23) umfasst ein Führungsmittel (28A, 28B), mit dem eine Stirnseite (29) des Zahnprofils (20) in einem dem Kontaktbereich (24) zugewandten Bereich und eine Umgebung des Zahnprofils (20) vor dem Bereich zumindest teilweise abdeckbar ist. Die Einrichtung (23) ist mit wenigstens einer Leitung (38 bis 41) ausgebildet, die in dem das Zahnprofil (20) abdeckenden Betriebszustand des Führungsmittels (28A, 28B) in dem vom Führungsmittel (28A, 28B) abgeschirmten Bereich vor dem Zahnprofil (20) verlaufend angeordnet ist und über die dem Kontaktbereich (24) durch das Führungsmittel (28A, 28B) hindurch Kühlschmierstoff zuführbar ist.

## Beschreibung

Die Erfindung betrifft eine Vorrichtung zum Abdecken eines Zahnprofils gemäß der im Oberbegriff des Patentanspruches 1 näher definierten Art.

Bei der spanabhebenden, insbesondere bei der schleifenden Bearbeitung von Zahnprofilen ist die Zufuhr von Kühlschmierstoff ein qualitätsbestimmendes Element. Kann eine ausreichende Kühlschmierstoffzufuhr nicht sichergestellt werden, entstehen im Kontaktbereich bzw. im Schleifspalt zwischen einem Werkzeug bzw. einem Schleifwerkzeug und dem spanabhebend bzw. schleifend bearbeiteten Werkstück unerwünscht hohe Betriebstemperaturen, Spananhaftungen an dem Werkzeug, wie einem Schleifwerkzeug bzw. einer Schleifscheibe sowie ungünstige Zerspanbedingungen. Dies führt unter Umständen zu sogenanntem Schleifbrand, der mit einer Veränderung der Zahnradoberfläche und einem Härteverlust im Bereich der Zahnflanke einhergeht. Daher ist die zielgerichtete Zufuhr von Kühlschmierstoff in den Schleifspalt eine wesentliche Voraussetzung für einen sicheren Schleifprozess.

Aus der Praxis sind weitreichende Maßnahmen zur gezielten Zufuhr von Kühlschmierstoffen während der Herstellung von Verzahnungsgeometrien bekannt. Zumeist wird der Kühlschmierstoff über flexible und manuell justierbare oder fest installierte Kühlmittelleitungen weitgehend parallel zum Werkzeug bzw. einer Schleifscheibe und parallel zur Zahnlücke zugeführt. Weiterhin sind Einrichtungen, beispielsweise NC-gesteuerte Kühlschmierstoffdüsen, bekannt, die bei sich änderndem Werkzeugdurchmesser bzw. Schleifscheibendurchmesser durch Abrichten oder bei geänderter Bearbeitungsrichtung des Werkzeugs bzw. Schleifrichtung der Schleifscheibe nachgeführt werden können.

Des Weiteren sind Ausführungen bekannt, bei welchen jeweils Kühlschmierstoff durch stark poröse Schleifscheiben in den Kontaktbereich zwischen der Schleifscheibe und dem zu bearbeitenden Werkstück zugeführt wird. Hierfür wird der Kühlschmierstoff mittels Düsen in den Schleifkörper gedrückt und im Schleifspalt zur Prozesskühlung wirksam genutzt. Dabei liegen die Düsen jeweils eng an den Schleifscheiben an.

Zusätzlich werden auch verschiedenartig ausgeformte Kühlschmierstoffdüsen verwendet. Dabei werden sogenannte Schuhdüsen oder auch Düsen mit einer Vielzahl parallel angeordneter Rohre eingesetzt, um eine effektive Zufuhr von Kühlschmierstoff in den Schleifspalt zu erzielen.

Beim Eintreten einer Schleifscheibe in eine Zahnlücke entsteht zunächst ein Spalt, durch den der Kühlschmierstoff in den Zerspanungsbereich eintreten kann, der während der Schleifbearbeitung von geraden oder schrägen Stirnradverzahnungen zumeist parallel zur Zahnlücke in den Schleifspalt geführt wird. Die Schleifscheibe wird dabei in Richtung der Zahnflankenlinie verfahren und erzeugt so das gewünschte Profil. Sobald aber das Schleifwerkzeug, beispielsweise eine Profilschleifscheibe oder eine Schleifschnecke, soweit in die Zahnlücke eingetreten ist, dass es die Zahnlücke an der Stirnfläche der Zähne weitgehend verschließt, kann nur noch ein kleiner Teil des Kühlschmierstoffs den Zerspanungsbereich erreichen. Ein Großteil des zugeführten Kühlschmierstoffs wird von der Stirnfläche des Zahnrades zurückgeworfen oder seitlich abgelenkt und hindert zudem den nachkommenden Kühlmittelstrahl, den Schleifspalt zu erreichen. Im weiteren Verlauf des Prozesses entsteht erneut ein Kanal, der durch die Schleifscheibe selbst und die bereits geschliffene Zahnflanke geformt ist und der eine ausreichende Kühlschmierstoffzufuhr ermöglicht.

Die DE 10 2008 019 074 B3 offenbart ein Verfahren zum Schleifen von außen- und/oder innenverzahnten Zahnrädern und eine Vorrichtung zur Herstellung von Zahnrädern mit einem als Schleifscheibe oder Schleifschnecke ausgebildeten Schleifwerkzeug zum Einbringen von Zahnlücken in ein scheiben- oder zylinderförmiges Werkstück. Um einen Kühlschmierstoff gut und effektiv in den Schleifspalt einbringen zu können, wird vorgeschlagen, an einer Eintritts- bzw. Stirnseite eines Zahnrades, von der aus die Schleifscheibe oder Schleifschnecke zugeführt wird, ein Führungsmittel anzuordnen. Das Führungsmittel ist zur Zwangszuführung von Kühlschmierstoff insbesondere bei einer Werkzeugpositionierung oberhalb der Verzahnung vorgesehen. Über das Führungsmittel wird vermieden, dass der Kühlschmierstoff vom Werkstück abströmen oder abspritzen kann und somit im Kontaktbereich zwischen dem Schleifwerkzeug und dem zu bearbeitenden Werkstück in ausreichendem Umfang zur Verfügung steht. Der Kühlschmierstoff wird über eine mit dem Werkzeug bewegte Zuführeinrichtung zugeführt, weshalb die Vorrichtung konstruktiv aufwendig ist und der Schleifprozess des Weiteren durch einen hohen Steuer- und Regelaufwand gekennzeichnet ist.

Der vorliegenden Erfindung liegt die Aufgabe zugrunde, die bekannten Lösungen in vorteilhafter Weise weiterzubilden.

Erfindungsgemäß wird diese Aufgabe mit einer Vorrichtung mit den Merkmalen des Patentanspruches 1 gelöst.

Die erfindungsgemäße Vorrichtung zum Abdecken eines Zahnprofils während einer spanabhebenden Bearbeitung mit einem Werkzeug umfasst eine Einrichtung zum Beaufschlagen wenigstens eines Kontaktbereiches zwischen dem Werkzeug und dem Zahnprofil während der schleifenden Bearbeitung des Zahnprofils durch das Werkzeug mit Kühlschmierstoff. Die Einrichtung weist ein Führungsmittel auf, mit dem eine Stirnseite des Zahnprofils in einem dem Kontaktbereich zugewandten Bereich und eine Umgebung des Zahnprofils vor dem Bereich zumindest teilweise abdeckbar ist.

Erfindungsgemäß ist die Einrichtung auf konstruktiv einfache Art und Weise mit wenigstens einer Leitung ausgebildet, die in dem vom Führungsmittel abgeschirmten Bereich vor dem Zahnprofil verlaufend angeordnet ist und über die dem Kontaktbereich durch das Führungsmittel hindurch Kühlschmierstoff zuführbar ist.

Über die Leitung der Einrichtung ist der Kühlschmierstoff auf konstruktive einfache Art und Weise und mit geringem Steuer- und Regelaufwand gezielt in Richtung des Bearbeitungsspaltes und damit des Kontaktbereiches zwischen dem Werkzeug und dem Zahnprofil führbar.

Das Führungsmittel begrenzt bei einer weiteren vorteilhaften Ausführungsform der erfindungsgemäßen Vorrichtung in seinem das Zahnprofil abdeckenden Betriebszustand wenigstens einen zum Werkzeug hin offenen Kanal, der zumindest teilweise fluchtend mit einem Zahnzwischenraum des Zahnprofils anordenbar ist. Dadurch wird wiederum auf einfache Art und Weise erreicht, dass der Kühlschmierstoff in gewünschtem Umfang in Richtung des Kontaktbereiches zwischen dem Werkzeug und dem Zahnprofil während der spanabhebenden Bearbeitung des Zahnprofils geführt wird. Dies ist auch dann der Fall, wenn Kühlschmierstoff nicht nur über die Leitung der Einrichtung sondern auch über eine weitere Zuführeinrichtung in Richtung des Kontaktbereiches zugeführt wird.

Mündet die wenigstens eine Leitung in dem das Zahnprofil abdeckenden Betriebszustand des Führungsmittels in einem der Stirnseite des Zahnprofils zugewandten Bereich des Kanals in den Kanal, ist eine gezielte Kühlschmierstoffzufuhr in den Bearbeitungsspalt wiederum mit geringem Aufwand möglich.

Das Führungsmittel weist bei einer weiteren vorteilhaften Ausführungsform der erfindungsgemäßen Vorrichtung im Anlagebereich an der Stirnfläche des Zahnprofils eine wenigstens annähernd an die Form des Zahnprofils angepasste Form auf. Dadurch ist wiederum gewährleistet, dass der Kühlschmierstoff im Übergangsbereich zwischen dem Führungsmittel und dem Zahnprofil im Wesentlichen ungehindert in Richtung des Bearbeitungsspaltes bzw. des Kontaktbereiches zwischen dem Werkzeug und dem Zahnprofil geführt werden kann.

Den Kanal begrenzende Seitenwände des Führungsmittels weisen bei einem weiteren vorteilhaften Ausführungsbeispiel der erfindungsgemäßen Vorrichtung jeweils einen die Kanalbreite mit zunehmendem Abstand von der Stirnfläche des Zahnprofils vergrößernden Verlauf auf. Dadurch bildet das Führungsmittel einerseits eine strömungsgünstig geformte Zuführeinrichtung für in den Bearbeitungsspalt einzubringenden Kühlschmierstoff und verhindert andererseits, dass der zuzuführende Kühlschmierstoff senkrecht auf die Stirnfläche des Zahnprofils auftritt, womit ein strömungsgünstiges Eintreten des Kühlschmierstoffes in den Bearbeitungsspalt sichergestellt wird.

Weisen die Seitenflächen des Führungsmittels im Anlagebereich an der Stirnfläche des Zahnprofils eine Höhe auf, die der Zahnhöhe zwischen einem Zahnfuß und einer Zahnspitze des Zahnprofils entspricht, wird im Wesentlichen die gesamte Stirnfläche des Zahnprofils im Bereich eines Zahnes in einem für die Zuführung von Kühlschmierstoff günstigen Umfang abgeschirmt. Zusätzlich nimmt die Höhe der Seitenflächen des Führungsmittels mit zunehmendem Abstand vom Anlagebereich an der Stirnfläche des Zahnprofils bei dieser Weiterbildung der erfindungsgemäßen Vorrichtung zumindest bereichsweise ab, womit das Führungsmittel einen Handhabungsbereich des Werkzeuges mit zunehmendem Abstand vom Zahnprofil in immer geringerem Umfang begrenzt.

Der Mündungsbereich der Leitung in den Kanal ist bei einer weiteren vorteilhaften Ausführungsform der erfindungsgemäßen Vorrichtung derart ausgeführt, dass der aus der Leitung austretende Kühlschmierstoff in dem das Zahnprofil abdeckenden Betriebszustand des Führungsmittels in Richtung des Kontaktbereiches zwischen dem Werkzeug und dem Zahnprofil ohne zusätzlichen Betätigungsaufwand führbar ist.

Dabei besteht die Möglichkeit, dass der Mündungsbereich kreisförmig, ellipsenförmig, schlitzförmig oder eckig ausgeführt ist.

Weist die Einrichtung zwei Leitungen auf und ist jeweils ein Mündungsbereich einer Leitung im Bereich einer der Seitenflächen des Führungsmittels vorgesehen, die den dem Zahnzwischenraum zuordenbaren Kanal begrenzen, ist ein Kontaktbereich zwischen der einen Seite des Werkzeuges und einer Zahnflanke eines ersten Zahnes des Zahnprofiles und gleichzeitig der Kontaktbereich zwischen der anderen Seite des Werkzeuges und einer Zahnflanke eines zweiten Zahnes des Zahnprofiles mit Kühlschmierstoff beaufschlagbar.

Die Leitungen stehen bei einer bauraumgünstigen und konstruktiv einfachen Ausführungsform der erfindungsgemäßen Vorrichtung mit einem gemeinsamen Kühlschmierstoffzuführbereich in Verbindung.

Der Bearbeitungsspalt wird bei einer weiteren vorteilhaften Ausführungsform der erfindungsgemäßen Vorrichtung dadurch in gewünschtem Umfang mit Kühlschmierstoff beaufschlagt, dass die Richtung, mit der der Kühlschmierstoff aus der Leitung in Richtung des Kontaktbereiches zwischen dem Werkzeug und dem Zahnprofil führbar ist, und eine Drehrichtung des Werkzeugs im Kontaktbereich mit dem Zahnprofil einander entsprechen.

Weist die Einrichtung mehrere Führungsmittel auf, wobei jeweils zwei Zähnen und einem davon begrenzten Zahnzwischenraum des Zahnprofils jeweils ein Führungsmittel zuordenbar ist, ist das Zahnprofil mit geringen Rüstzeiten bearbeitbar.

Die Einrichtung weist bei einer weiteren vorteilhaften Ausführungsform der erfindungsgemäßen Vorrichtung ein mit dem Führungsmittel verbundenes Bauteil auf. Das Bauteil ist mit einem Werkstückhalter in Wirkverbindung bringbar. Zusätzlich ist im Bereich des Bauteils der Kühlschmierstoffzuführbereich vorgesehen.

Dabei besteht die Möglichkeit, dass die Vorrichtung am Zahnprofil befestigt ist oder Teil der Haltevorrichtung zur Fixierung des Zahnprofils während der schleifenden Bearbeitung oder sogar Teil einer zur Bearbeitung des Zahnprofils eingesetzten Werkzeugmaschine ist.

Des Weiteren besteht auch die Möglichkeit, dass die Vorrichtung einteilig oder mehrteilig ausgebildet ist.

Bei einer mehrteiligen Ausführung der Vorrichtung weist die Einrichtung ein mit dem Führungsmittel verbundenes Bauteil auf, das bewegbar mit einem weiteren Bauteil verbunden ist, das wiederum mit einem Werkzeughalter in Wirkverbindung bringbar ist. Damit besteht auf einfache Art und Weise die Möglichkeit, dass die Vorrichtung von einem Werkzeughalter oder anderen Bauelementen einer Werkzeugmaschine aufgenommen, versetzt und haltbar ist, um einen automatischen Bauteilwechsel zu ermöglichen.

Zusätzlich besteht auch die Möglichkeit, die Vorrichtung mit Befestigungsmitteln zur Fixierung sowie zur Ausrichtung am Zahnprofil oder einer Haltevorrichtung des Zahnprofils auszuführen. Dabei können ein oder mehrere Formschlusselemente vorgesehen sein, die einem oder mehreren Formelementen des Zahnprofils oder der Vorrichtung selbst entsprechend ausgeführt sind. Des Weiteren können auch Befestigungselemente, wie Magnete, Schraubverbindungen oder lösbare Klebeverbindungen oder dergleichen vorgesehen sein.

Darüber hinaus besteht die Möglichkeit, die Vorrichtung derart auszugestalten, dass sie vom Werkzeughalter oder anderen Bauelementen der Maschine aufgenommen, versetzt und gehalten werden kann, um einen automatischen Bauteilwechsel zu ermöglichen.

Der Kühlschmierstoffzuführbereich umfasst bei einer weiteren vorteilhaften Ausführungsform der erfindungsgemäßen Vorrichtung sowohl im Bauteil als auch im weiteren Bauteil Kühlschmierstoff führende Bereiche. Des Weiteren ist eine Schnittstelle zwischen dem Bauteil und dem weiteren Bauteil über eine Dichtung gegenüber der Umgebung abgedichtet. Dadurch ist die Zufuhr von Kühlschmierstoff ausgehend von dem vorzugsweise mit einem statischen Werkzeugmaschinenteil verbundenen weiteren Bauteil in das mit dem Zahnprofil verbundene und bewegbar gegenüber dem weiteren Bauteil ausgeführte Bauteil ohne Kühlschmierstoffverluste durchführbar.

Die Dichtung kann beispielsweise Dichtringe oder dergleichen aufweisen.

Ist der Kühlschmierstoffzuführbereich derart ausgebildet, dass jeweils nur die Leitung vom Kühlschmierstoffzuführbereich mit Kühlschmierstoff beaufschlagbar ist, über deren Mündungsbereich ein Kontaktbereich zwischen dem Zahnprofil und dem Werkzeug mit Kühlschmierstoff beaufschlagbar ist, ist mit geringem Aufwand gewährleistet, dass nur die Kühlschmierstoffmenge zugeführt wird, die benötigt wird.

In Abhängigkeit des jeweils vorliegenden Anwendungsfalles besteht wiederum die Möglichkeit, dass die Vorrichtung vor der Bearbeitung des Zahnprofils an diesem angebracht und nach der Bearbeitung wieder entfernt wird.

Des Weiteren kann die Vorrichtung nach der geplanten oder bereits vorhandenen Zahnaufteilung am Bauteil ausgerichtet werden.

Zusätzlich kann die Vorrichtung ganz oder teilweise aus Werkstoffen, wie beispielsweise aus Kunststoffen oder aus Metallen oder aus Kombinationen aus mehreren Werkstoffen hergestellt sein.

Zudem besteht die Möglichkeit, die Vorrichtung mittels Gießen, additiven Fertigungsverfahren, wie 3D-Druck oder auftragenden Fertigungsverfahren, oder mittels spanabhebender Verfahren, wie beispielsweise Fräsen oder dergleichen herzustellen.

Durch verminderte Kühlschmierstoffversorgung in kritischen Bereichen von Zahnprofilen verursachter Schleifbrand ist durch einfache Anordnung der erfindungsgemäßen Vorrichtung an der Stirnseite einer zu bearbeitenden Verzahnung vermeidbar. Eine strömungsgünstige Ausformung der Vorrichtung ermöglicht eine gezielte und effektive Einleitung von Kühlschmierstoff in den Schleifspalt mit dem Effekt einer deutlichen Erhöhung der Kühlschmierstoffmenge im Schleifspalt verglichen mit Vorrichtungen, bei welchen der Kühlschmierstoff über konventionelle Kühlschmierstoffdüsen zugeführt wird.

Dabei besteht die Möglichkeit, den Kühlschmierstoff gezielt in die an den Bearbeitungsspalt zwischen dem Werkzeug und dem spanabhebend zu bearbeitenden Werkstück angrenzenden Kühlschmierstoffkanäle mittels einer zweiteiligen Vorrichtung zur Übertragung des Kühlschmierstoffs einzuleiten.

Generell ist die erfindungsgemäße Vorrichtung während der Bearbeitung von geraden und schrägen Stirnverzahnungen einsetzbar, bei welchen Zahnlücken diskontinuierlich oder kontinuierlich, beispielsweise mittels Schleifen, wie Stiftschleifen, Profilschleifen oder dgl., Fräsen, wie Wälzfräsen oder diskontinuierlichem Profilfräsen, Stoßen oder Räumen bearbeitet werden. Dabei kann es vorgesehen sein, dass die Stirnverzahnungen beispielsweise mit einer Schleifschnecke, mit einer Schleifscheibe, mit einem Fingerfräser, mit einem Scheibenfräser oder dgl. spanabhebend bearbeitet werden. Das bedeutet, dass die erfindungsgemäße Vorrichtung generell während der Fertigung von Zahnrädern einsetzbar ist, die beispielsweise in Flugtriebwerken oder auch in anderen Industriebereichen, wie z.B. im Automobilbau eingesetzt werden.

Mittels der erfindungsgemäßen Vorrichtung wird eine vorrichtungsseitige bzw. bauteilseitige Modifizierung der Spaltgeometrie eines Zahnprofils vorgeschlagen, um die aus dem Stand der Technik bekannten Nachteile, die aus einer zu geringen Kühlschmierstoffzufuhr in Teilbereichen der Zahnflanke resultieren, zu vermeiden.

Hierfür kann es vorgesehen sein, dass eine strömungsgünstige Form der Hilfsvorrichtung an der Werkzeugmaschine, an der Vorrichtung oder an dem Zahnprofil selbst befestigt oder positioniert wird, die eine gezielte Kühlschmierstoffzufuhr in den Schleifspalt ermöglicht. Die geometrische Ausgestaltung der Vorrichtung ist dabei derart, dass beispielsweise eine Stirnfläche eines Zahnrades, vor allem aber die Stirnflächen der Zähne selbst zu großen Teilen durch die Vorrichtung abgedeckt werden. Damit wird auf einfache Art und Weise verhindert, dass Kühlschmierstoff zumeist senkrecht auf die Stirnfläche des zu schleifenden Zahnrades auftreffen kann und so ein strömungsgünstiges Eintreten in den Schleifspalt sichergestellt wird.

Darüber hinaus ist es vorgesehen, den Kühlschmierstoff bedarfsweise ausschließlich oder ergänzend zu externen Kühlschmierstoffzuführungen durch die Leitungen bzw. Kühlschmierstoffkanäle in Richtung des Bearbeitungsspaltes, wie eines Schleifspaltes zu führen, die innerhalb der Vorrichtung angeordnet sind. Dabei kann der Kühlschmierstoff nah am Übergang der Vorrichtung zur Zahnradstirnfläche und somit gezielt in den Bearbeitungsspalt eingeleitet werden.

Des Weiteren weist die Vorrichtung in Abhängigkeit des jeweils vorliegenden Anwendungsfalles ein Element auf, das es ermöglicht, den Kühlschmierstoff so zuzuführen, dass ausschließlich durch die dem Bearbeitungsspalt direkt benachbarten Kühlschmierstoffkanäle Kühlschmierstoff zugeführt wird, sodass ein Großteil des Kühlschmierstoffs in den eigentlichen Bearbeitungsspaltspalt gelangt. Dies wird beispielsweise durch eine Kammer erreicht, die so ausgeführt ist, dass sie den Kühlschmierstoff nur in jeweils zwei an den Bearbeitungsspalt angrenzende Kühlschmierstoffkanäle leitet.

Sowohl die in den Patentansprüchen angegebenen Merkmale als auch die in dem nachfolgenden Ausführungsbeispiel der erfindungsgemäßen Vorrichtung angegebenen Merkmale sind jeweils für sich allein oder in beliebiger Kombination miteinander geeignet, den erfindungsgemäßen Gegenstand weiterzubilden.

Weitere Vorteile und vorteilhafte Ausführungsformen der erfindungsgemäßen Vorrichtung ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfachte Schnittdarstellung eines Flugtriebwerks mit einem Bläser und mit einer Niederdruckturbine, wobei der Bläser über ein Getriebe mit der Niederdruckturbine in Verbindung steht;
- Fig. 2: eine Längsschnittansicht eines Zahnrades und ein Schleifwerkzeug, wobei an einer Stirnseite des Zahnrades eine Vorrichtung zum Abdecken des Zahnprofils des Zahnrades während der schleifenden Bearbeitung des Zahnprofils mit dem Schleifwerkzeug angeordnet ist; und
- Fig. 3: eine vergrößerte dreidimensionale Teilansicht der Vorrichtung zum Abdecken gemäß Fig. 2.

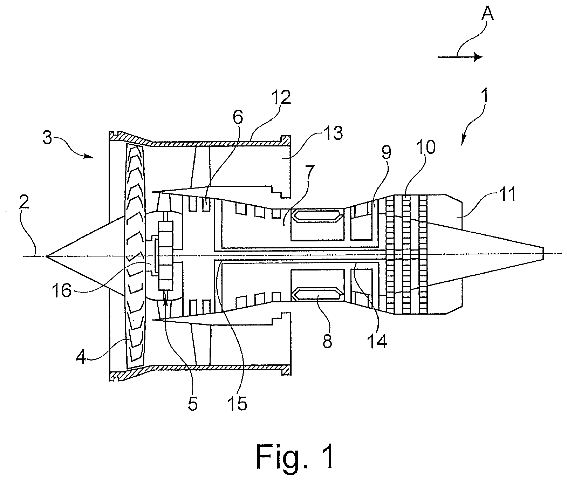

In Fig. 1 ist eine als Flugtriebwerk 1 eines Flugzeugs ausgeführte Strömungsmaschine mit einem Getriebe 5 gezeigt, das als Planetengetriebe ausgebildet ist. Das Flugtriebwerk 1 ist eine Turbomaschine, mit der das Getriebe 5 vorteilhaft kombiniert werden kann. Aus dem Folgenden ergibt sich eindeutig, dass das Getriebe 5 auch bei anderweitig ausgeführten Turbomaschinen, wie einem Propellerturbinenluftstrahltriebwerk bzw. einem Turboprop, eingesetzt werden kann.

Das Flugtriebwerk 1 weist eine Hauptdrehachse 2 auf. Des Weiteren umfasst das Flugtriebwerk 1 in axialer Strömungsrichtung A einen Lufteinlass 3, einen Bläser 4, das Getriebe 5, einen Niederdruckverdichter 6, einen Hochdruckverdichter 7, eine Verbrennungseinrichtung 8, eine Hochdruckturbine 9, eine Niederdruckturbine 10 und eine Ausströmdüse 11. Eine Triebwerksgondel 12 umgibt das Flugtriebwerk 1 und begrenzt den Lufteinlass 3.

Das Flugtriebwerk 1 arbeitet in herkömmlicher Weise, wobei in den Lufteinlass 3 eintretende Luft durch den Bläser 4 beschleunigt wird, um zwei Luftströme zu erzeugen. Ein erster Luftstrom strömt in den Zwischendruckverdichter 6 und ein zweiter Luftstrom wird durch einen Nebenstromkanal 13 bzw. Bypasskanal geführt, um einen Antriebsschub bereitzustellen. Der Niederdruckverdichter 6 komprimiert den ihm zugeführten Luftstrom, bevor die Luft im Bereich des Hochdruckverdichters 7 weiter verdichtet wird.

Die aus dem Hochdruckverdichter 7 ausströmende verdichtete Luft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 10 an, bevor sie über die Ausströmdüse 11 ausgeführt werden, um einen zusätzlichen Antriebsschub bereitzustellen. Die Hochdruckturbine 9 und die Niederdruckturbine 10 treiben mittels einer Hochdruckwelle 14 bzw. einer Niederdruckwelle 15 den Hochdruckverdichter 7 bzw. den Niederdruckverdichter 6 an. Die die Niederdruckturbine 10 mit dem Niederdruckverdichter 6 koppelnde Niederdruckwelle 15 ist über das ein Untersetzungsgetriebe darstellende Getriebe 5 mit dem Bläser 4 gekoppelt. Ein über die Niederdruckwelle 15 am Getriebe 5 anliegendes Antriebsmoment wird der Standübersetzung der Getriebes 5 entsprechend angehoben und einer Bläserwelle 16 zugeführt. Wenn der Bläser 4 von der Niederdruckturbine 10 angetrieben wird, wird die Drehzahl der Niederdruckwelle 15 der Übersetzung des Getriebes 5 entsprechend reduziert und die Bläserwelle 16 sowie der Bläser 4 mit dieser reduzierten Drehzahl und mit einem gegenüber dem an der Niederdruckwelle 15 anliegenden Drehmoment erhöhten Drehmoment angetrieben.

Bei der in Fig. 1 gezeigten Ausführung des Getriebes 5 ist ein Sonnenrad des Getriebes 5 drehfest mit der Niederdruckwelle 15 und ein Planetenträger des Getriebes 5 drehfest mit der Bläserwelle 16 verbunden. Ein Hohlrad des Getriebes 5 ist gehäusefest angebunden. Somit liegt eine so genannte epizyklische Ausführung des Getriebes 5 vor. Unabhängig davon kann das Getriebe 5 auch eine andere Ausführung eines Planetengetriebes aufweisen.

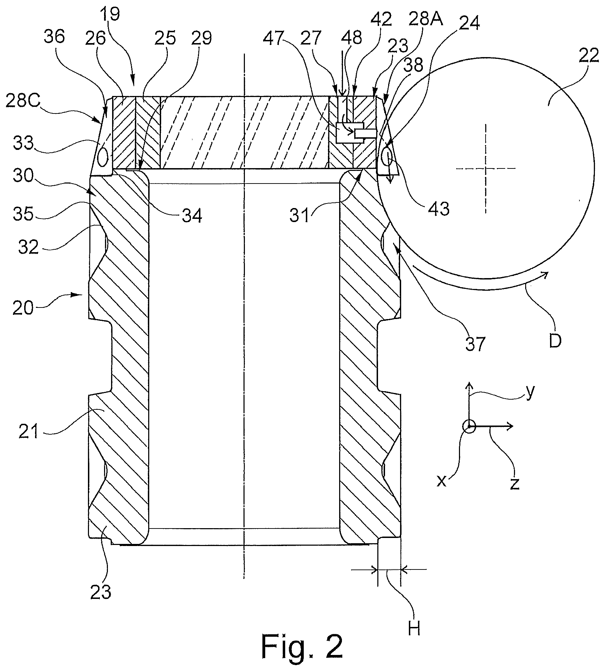

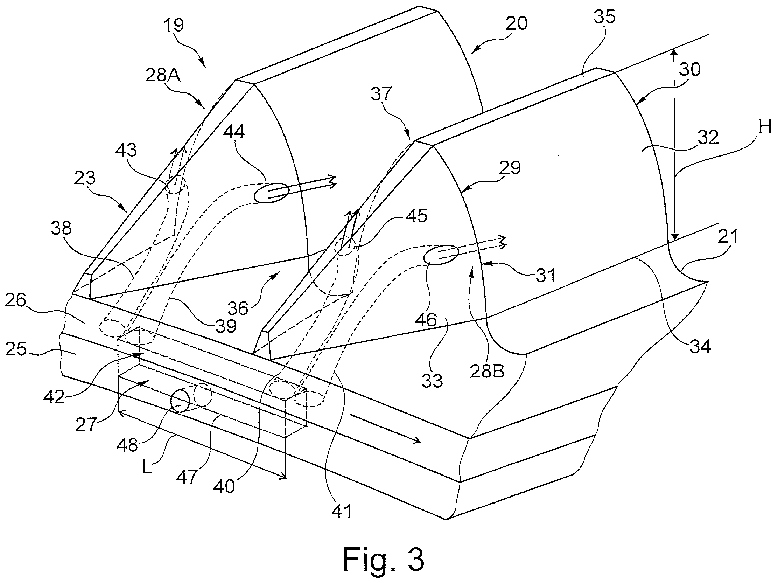

Nachfolgend wird eine in Fig. 2 und Fig. 3 näher dargestellte Ausführungsform einer Vorrichtung 19 zum Abdecken eines Zahnprofils 20 eines doppelschrägverzahnten Stirnrades bzw. Zahnrades 21, das ein Planetenrad des Getriebes 5 ist, anhand eines Schleifprozesses mit einem als Schleifscheibe ausgeführten Schleifwerkzeug 22 näher beschrieben.

Unabhängig davon ist die Vorrichtung 19 auch während weiterer spanabhebender Bearbeitungsprozesse, wie Fräsen, Stoßen, Räumen oder dgl. im nachbeschriebenen Umfang verwendbar, um Kühlschmierstoff in einen Bearbeitungsspalt zwischen dem jeweils zur Bearbeitung eines Zahnrades eingesetzten Werkzeuges und der aktuell bearbeiteten Oberfläche des Werkstückes in einem solchen Umfang einzuleiten, dass die bekannten Nachteile aufgrund bearbeitungsseitig verursachter unzulässig hoher lokaler Bauteiltemperaturen vermieden werden.

Die Vorrichtung 19 ist mit einer Einrichtung 23 zum Beaufschlagen eines Kontaktbereiches zwischen dem Schleifwerkzeug 22 und dem Zahnprofil 20 während der schleifenden Bearbeitung des Zahnprofils 20 durch das Schleifwerkzeug 22 mit Kühlschmierstoff ausgebildet.

Darüber hinaus ist in Fig. 3 eine vergrößerte dreidimensionale Teilansicht des Zahnrades 21 und der Vorrichtung 19 gezeigt. Aus der Zusammenschau der Darstellungen gemäß Fig. 2 und Fig. 3 geht hervor, dass die Vorrichtung 19 ein erstes hohlzylindrisches Bauteil 25 umfasst, das radial innerhalb eines zweiten ebenfalls zumindest bereichsweise hohlzylindrisch ausgeführten Bauteiles 26 angeordnet ist. Das radial innere erste Bauteil 25 ist vorliegend in nicht näher dargestelltem Umfang mit einer nicht näher dargestellten Werkzeugmaschine drehfest verbunden, die den Antrieb für das Schleifwerkzeug 22 zur Verfügung stellt. Das zweite Bauteil 26 ist in Umfangsrichtung des ersten Bauteiles 25 drehbar auf dem ersten Bauteil 25 angeordnet und gelagert sowie mit einem Kühlschmierstoffzuführbereich 27 ausgeführt, über den Kühlschmierstoff in der nachfolgend näher erläuterten Art und Weise in Richtung des Kontaktbereiches 24 durch das erste Bauteil 25 und durch das zweite Bauteil 26 führbar ist.

Das zweite Bauteil 26 umfasst über den Umfang der Vorrichtung 19 dem Zahnprofil 20 des Zahnrades 21 entsprechend verteilt angeordnete Führungsmittel 28A bis 28C, die vorliegend einstückig mit dem ersten Bauteil 26 ausgeführt sind. Die Führungsmittel 28A bis 28C liegen an einer Stirnseite 29 des Zahnprofils 20 bzw. an Stirnseiten 29 der Zähne 30 des Zahnprofils 21 an und decken somit das gesamte Zahnprofil 20 des Zahnrades 21 ab.

Die Führungsmittel 28A bis 28C weisen im Anlagebereich 31 an der Stirnseite 29 des Zahnprofils 20 eine dem Zahnprofil 20 entsprechende äußere Form auf, so dass im Anlagebereich 31 ein im Wesentlichen sprungfreier Übergang zwischen Außenseiten 32 der Zähne 30 und Seitenwänden bzw. Seitenflächen 33 der Führungsmittel 28A bis 28C vorliegt. Eine Höhe der Seitenflächen 33 der Führungsmittel 28A bis 28C entspricht im Anlagebereich 13 an der Stirnfläche bzw. Stirnseite 29 des Zahnprofils 20 einer Zahnhöhe H zwischen einem Zahnfuß 34 und einer Zahnspitze 35. Zusätzlich nimmt die Höhe der Seitenflächen 33 mit zunehmendem Abstand in y-Richtung bzw. in axialer Richtung des Zahnrades 21 ab. Die Führungsmittel 28A bis 28C begrenzen in dem in Fig. 2 näher dargestellten Umfang einen zum Schleifwerkzeug 22 hin offenen Kanal 36, der fluchtend mit einem Zahnzwischenraum 37 angeordnet ist.

In den Führungsmitteln 28A bis 28C sind in der in Fig. 3 dargestellten Art und Weise jeweils zwei Leitungen 38, 39 bzw. 40, 41 vorgesehen. Die Leitungen 38, 39 bzw. 40, 41 erstrecken sich vorliegend von einer Schnittstelle 42 zwischen dem ersten Bauteil 25 und dem zweiten Bauteil 26 bis zu Mündungsbereichen 43 bis 46, die in den Seitenflächen 33 der Führungsmittel 28A 28C nahe des Anlagebereiches 31 vorgesehen sind. Dabei münden die Leitungen 39 und 40 in den Kanal 36, der in Deckung mit dem Zahnzwischenraum 37 zwischen den beiden in Fig. 3 dargestellten Zähnen 30 des Zahnprofils 20 angeordnet ist.

Eine Breite der Führungsmittel 28A bis 28C entspricht im Anlagebereich 31 gleich der Zahnfußbreite und verringert sich im dargestellten Umfang mit zunehmendem Abstand vom Anlagebereich 31 in y-Richtung. Damit weist der Kanal 36 ausgehend vom Anlagebereich 31 in y-Richtung einen sich erweiternden Verlauf auf, der bei einer Beaufschlagung des Zahnrades 21 mit Kühlschmierstoff ausgehend von einer zusätzlichen werkzeugmaschinenseitigen Zuführeinrichtung strömungstechnisch günstig in den Zahnzwischenraum 37 zusätzlich zu der Zuführung über die Leitungen 39 und 40 zuführbar ist.

Im ersten Bauteil 25 ist der Kühlschmierstoffzuführbereich 27 mit einer Kühlschmierstoffkammer 47 ausgebildet, die über eine Zuführöffnung 48 mit Kühlschmierstoff beaufschlagbar ist. Dabei ist eine Länge L der Kühlschmierstoffkammer 47 in Umfangsrichtung der Vorrichtung 19 derart ausgelegt, dass jeweils zwei einem Zahnzwischenraum 37 zugeordnete Leitungen 39 und 40 mit dem Kühlschmierstoffzuführbereich 27 in Wirkverbindung stehen, der aktuell mit dem Schleifwerkzeug 22 schleifend bearbeitet wird, während die weiteren Leitungen 38, 41, die Zahnzwischenräumen 37 zugeordnet sind, die aktuell nicht schleifend bearbeitet werden, nicht mit Kühlschmierstoff beaufschlagt werden. Bei kontinuierlichen Bearbeitungsprozessen, wie dem Wälzschleifen mit einer Schleifschnecke, wird die Anzahl der versorgten Schleifzwischenräume entsprechend der Anzahl der gleichzeitig schleifend bearbeiteten Schleifzwischenräume erweitert.

Der vorbeschriebenen konstruktiven Ausführung der Vorrichtung 19 liegt unter anderem die Tatsache zugrunde, dass das Schleifwerkzeug 22 während der schleifenden Bearbeitung lediglich in y-Richtung durch den Zahnzwischenraum 37 bewegt wird und am Ende des Schleifprozesses entweder in y-Richtung oder in z-Richtung aus dem Eingriffsbereich mit dem Zahnprofil 20 und auch aus dem Eingriffsbereich mit der Vorrichtung 19 geführt wird. Anschließend wird das Zahnrad 21 gemeinsam mit den Führungsmitteln 28A bis 28C und mit dem zweiten Bauteil 26 solange in Umfangsrichtung bzw. in x-Richtung verdreht, bis das Schleifwerkzeug 22 in einen weiteren Zahnzwischenraum 19 eingebracht werden kann. Dabei bleibt das drehfest mit der Werkzeugmaschine verbundene erste Bauteil 25 in der in Fig. 3 dargestellten Lage, so dass die Leitungen 39 und 40 nicht länger mit der Kühlschmierstoffkammer 47 verbunden sind. Durch die Verdrehung des Zahnrades 21 und des zweiten Bauteiles 26 kommen die dem nunmehr weiteren schleifend zu bearbeitenden Zahnzwischenraum 37 zugeordneten weiteren Leitungen mit der Kühlschmierstoffkammer 47 in Wirkverbindung und es ist Kühlschmierstoff in den zu bearbeitenden Zahnzwischenraum 37 in gewünschtem Umfang einleitbar.

In Abhängigkeit des jeweils vorliegenden Anwendungsfalles besteht auch die Möglichkeit, dass anstatt des Zahnprofiles eines Zahnrades auch ein Zahnprofil einer Zahnstange oder eines Zahnradsegmentes schleifend bearbeitet wird, wobei die Vorrichtung 19 dann nicht hohlzylindrisch sondern ebenfalls stangenartig oder lediglich segmentartig ausgeführt ist.

Falls während der schleifenden Bearbeitung eines Zahnprofiles lediglich eine Zahnflanke eines Zahnes bearbeitet wird, besteht auch die Möglichkeit, die Vorrichtung lediglich mit einem Führungsmittel auszuführen. Des Weiteren besteht auch die Möglichkeit, die Vorrichtung lediglich mit zwei Führungsmitteln 28A und 28B auszugestalten und jeweils das Zahnrad 21 gegenüber der Vorrichtung 19 zu verdrehen, bis die nächsten zu schleifenden Zähne mit den Führungsmitteln 28A und 28B in Deckung sind.

Die Richtung, mit der der Kühlschmierstoff aus den Leitungen 38 bis 41 in Richtung des Kontaktbereiches 24 zwischen dem Schleifwerkzeug 4 und dem Zahnprofil 2 führbar ist, und eine Drehrichtung D des Schleifwerkzeugs 22 entsprechen einander im Kontaktbereich 24. Damit wird der in den Zahnzwischenraum 37 zugeführte Kühlschmierstoff vom Schleifwerkzeug 22 in gewünschtem Umfang in den Kontaktbereich 24 gefördert und Schleifbrand in gewünschtem Umfang vermieden.

### Bezugszeichenliste

- 1: Strömungsmaschine; Flugtriebwerk
- 2: Hauptdrehachse
- 3: Lufteinlass
- 4: Bläser
- 5: Getriebe
- 6: Niederdruckverdichter
- 7: Hochdruckverdichter
- 8: Verbrennungseinrichtung
- 9: Hochdruckturbine
- 10: Niederdruckturbine
- 11: Ausströmdüse
- 12: Triebwerksgondel
- 13: Nebenstromkanal
- 14: Hochdruckwelle
- 15: Niederdruckwelle
- 16: Bläserwelle
- 19: Vorrichtung
- 20: Zahnprofil
- 21: Stirnrad
- 22: Schleifwerkzeug
- 23: Einrichtung
- 24: Kontaktbereich
- 25: erstes Bauteil
- 26: zweites Bauteil
- 27: Kühlschmierstoffzuführbereich
- 28A bis 28C: Führungsmittel
- 29: Stirnseite
- 30: Zähne
- 31: Anlagebereich
- 32: Außenseite
- 33: Seitenfläche
- 34: Zahnfuß
- 35: Zahnspitze
- 36: Kanal
- 37: Zahnzwischenraum
- 38 bis 41: Leitung
- 42: Schnittstelle zwischen den Bauteilen
- 43 bis 46: Mündungsbereich
- 47: Kühlschmierstoffkammer
- 48: Zuführöffnung
- D: Drehrichtung des Schleifwerkzeugs
- H: Zahnhöhe
- L: Länge der Kühlschmierstoffkammer

## Patentansprüche

1. Vorrichtung (19) zum Abdecken eines Zahnprofiles (20) während einer spanabhebenden Bearbeitung mit einem Werkzeug (22) mit einer Einrichtung (23) zum Beaufschlagen wenigstens eines Kontaktbereiches (24) zwischen dem Werkzeug (22) und dem Zahnprofil (20) während der spanabhebenden Bearbeitung des Zahnprofils (20) durch das Werkzeug (22) mit Kühlschmierstoff, wobei die Einrichtung (23) ein Führungsmittel (28A bis 28C) umfasst, mit dem eine Stirnseite (29) des Zahnprofils (20) in einem dem Kontaktbereich (24) zugewandten Bereich und eine Umgebung des Zahnprofils (20) vor dem Bereich zumindest teilweise abdeckbar ist, **dadurch gekennzeichnet, dass** die Einrichtung (23) mit wenigstens einer Leitung (38 bis 41) ausgebildet ist, die in dem das Zahnprofil (20) abdeckenden Betriebszustand des Führungsmittels (28A bis 28C) in dem vom Führungsmittel (28A bis 28C) abgeschirmten Bereich vor dem Zahnprofil (20) verlaufend angeordnet ist und über die dem Kontaktbereich (24) durch das Führungsmittel (28A bis 28C) hindurch Kühlschmierstoff zuführbar ist.

2. Vorrichtung nach Anspruch 1, **dadurch gekennzeichnet, dass** das Führungsmittel (28A bis 28C) in seinem das Zahnprofil (20) abdeckenden Betriebszustand wenigstens einen zum Werkzeug (22) hin offenen Kanal (36) begrenzt, der zumindest teilweise fluchtend mit einem Zahnzwischenraum (37) des Zahnprofils (20) anordenbar ist.

3. Vorrichtung nach Anspruch 2, **dadurch gekennzeichnet, dass** die wenigstens eine Leitung (38 bis 41) in dem das Zahnprofil (20) abdeckenden Betriebszustand des Führungsmittels (28A bis 28C) in einem der Stirnseite (29) des Zahnprofils (20) zugewandten Bereich des Kanals (36) in den Kanal (36) mündet.

4. Vorrichtung nach einem der Ansprüche 1 bis 3, **dadurch gekennzeichnet, dass** das Führungsmittel (28A bis 28C) in einem Anlagebereich (31) an der Stirnseite (29) des Zahnprofils (20) eine wenigstens annähernd an die Form des Zahnprofils (20) angepasste Form aufweist.

5. Vorrichtung nach einem der Ansprüche 2 bis 4, **dadurch gekennzeichnet, dass** den Kanal (36) begrenzende Seitenwände (33) des Führungsmittels (28A bis 28C) jeweils einen die Kanalbreite mit zunehmendem Abstand von der Stirnseite (29) des Zahnprofils (20) vergrößernden Verlauf aufweisen.

6. Vorrichtung nach Anspruch 5, **dadurch gekennzeichnet, dass** die Seitenwände (33) des Führungsmittels (28A bis 28C) im Anlagebereich (31) an der Stirnseite (29) des Zahnprofils (20) eine Höhe (H) aufweisen, die der Zahnhöhe (H) zwischen einem Zahnfuß (34) und einer Zahnspitze (35) des Zahnprofils (20) entspricht, wobei die Höhe (H) der Seitenwände (33) des Führungsmittels (28A bis 28C) mit zunehmendem Abstand vom Anlagebereich (31) an der Stirnseite (29) des Zahnprofils (20) jeweils zumindest bereichsweise abnimmt.

7. Vorrichtung nach einem der Ansprüche 2 bis 6, **dadurch gekennzeichnet, dass** der Mündungsbereich (43 bis 46) der Leitung (38 bis 41) in den Kanal (36) derart ausgeführt ist, dass der aus der Leitung (38 bis 41) austretende Kühlschmierstoff in dem das Zahnprofil (20) abdeckenden Betriebszustand des Führungsmittels (28A bis 28C) in Richtung des Kontaktbereiches (24) zwischen dem Werkzeug und dem Zahnprofil (20) führbar ist.

8. Vorrichtung nach einem der Ansprüche 2 bis 7, **dadurch gekennzeichnet, dass** die Einrichtung (23) wenigstens zwei Leitungen (38 bis 41) aufweist, wobei jeweils ein Mündungsbereich (43 bis 46) einer Leitung (38 bis 41) im Bereich einer der Seitenflächen (33) des Führungsmittels (28A bis 28C) vorgesehen ist, die den dem Zahnzwischenraum (37) zuordenbaren Kanal (36) begrenzen.

9. Vorrichtung nach Anspruch 8, **dadurch gekennzeichnet, dass** die Leitungen (38 bis 41) mit einem gemeinsamen Kühlschmierstoffzuführbereich (27) in Verbindung stehen.

10. Vorrichtung nach einem der Ansprüche 1 bis 9, **dadurch gekennzeichnet, dass** die Richtung, mit der der Kühlschmierstoff aus der Leitung (38 bis 41) in Richtung des Kontaktbereiches (24) zwischen dem Werkzeug (22) und dem Zahnprofil (20) führbar ist, und eine Drehrichtung des Werkzeugs (22) im Kontaktbereich (24) mit dem Zahnprofil (20) einander entsprechen.

11. Vorrichtung nach einem der Ansprüche 2 bis 10, **dadurch gekennzeichnet, dass** die Einrichtung (23) mehrere Führungsmittel (28A bis 28C) aufweist, wobei jeweils zwei Zähnen (30) und einem davon begrenzten Zahnzwischenraum (37) des Zahnprofils (20) jeweils ein Führungsmittel (28A bis 28C) zuordenbar ist.

12. Vorrichtung nach einem der Ansprüche 9 bis 11, **dadurch gekennzeichnet, dass** die Einrichtung ein mit dem Führungsmittel verbundenes Bauteil aufweist, das mit einem Werkstückhalter in Wirkverbindung bringbar ist und in dessen Bereich der Kühlschmierstoffzuführbereich vorgesehen ist.

13. Vorrichtung nach einem der Ansprüche 1 bis 11, **dadurch gekennzeichnet, dass** die Einrichtung (23) ein mit dem Führungsmittel (28A bis 28C) verbundenes Bauteil (8) aufweist, das bewegbar mit einem weiteren Bauteil (7) verbunden ist, das wiederum mit einem Werkzeughalter in Wirkverbindung bringbar ist.

14. Vorrichtung nach Anspruch 13, **dadurch gekennzeichnet, dass** der Kühlschmierstoffzuführbereich (27) sowohl im Bauteil (8) als auch im weiteren Bauteil (7) Kühlschmierstoff führende Bereiche umfasst, wobei eine Schnittstelle (42) zwischen dem Bauteil (8) und dem weiteren Bauteil (7) über eine Dichtung gegenüber der Umgebung abgedichtet ist.

15. Vorrichtung nach einem der Ansprüche 9 bis 14, **dadurch gekennzeichnet, dass** der Kühlschmierstoffzuführbereich (27) derart ausgebildet ist, dass jeweils nur die Leitung (28A bis 28C) vom Kühlschmierstoffzuführbereich (27) mit Kühlschmierstoff beaufschlagbar ist, über deren Mündungsbereich (43 bis 46) ein Kontaktbereich (24) zwischen dem Zahnprofil (20) und dem Werkzeug (22) mit Kühlschmierstoff beaufschlagbar ist.
